# EUROPÄISCHE PATENTSCHRIFT

(11) **EP 1 733 905 B1**
(45) Veröffentlichungstag und Bekanntmachung des Hinweises auf die Patenterteilung: **22.05.2013**
(21) Anmeldenummer: 06012335.3
(22) Anmeldetag: 14.06.2006
(51) Int. Cl.: B60H 1/00

(54) **Klimaanlage mit Kaltluft-Bypass für ein Kraftfahrzeug**
Air conditioning unit for a vehicle comprising a cold-air bypass
Dispositif de climatisation pour véhicule comprenant une dérivation à air froid

(30) Priorität: 17.06.2005 DE 102005028205
(43) Veröffentlichungstag der Anmeldung: 20.12.2006
(73) Patentinhaber: Behr GmbH & Co. KG, 70469 Stuttgart (DE)
(72) Erfinder: Augull, Michael, Dipl.-Ing.(FH), 71088 Holzgerlingen (DE); Berndt, Ralf, 71254 Ditzingen-Schöckingen (DE); Burkhardt, Carsten, Dipl.-Ing.(FH), 74653 Künzelsau (DE); Roth, Michael, Dipl.-Ing., 70193 Stuttgart (DE); Schweizer, Gebhard, Dipl.-Ing., 71229 Leonberg (DE)
(74) Vertreter: Grauel, Andreas

(56) Entgegenhaltungen:
- EP-A- 0 748 708
- DE-C1- 19 701 875
- DE-C1- 19 954 972
- DE-U1- 29 709 768
- US-A- 6 029 469
- PATENT ABSTRACTS OF JAPAN Bd. 012, Nr. 442 (M-766), 21. November 1988 (1988-11-21) & JP 63 173714 A (TOYOTA MOTOR CORP), 18. Juli 1988 (1988-07-18)

## Beschreibung

Die Erfindung betrifft eine Klimaanlage mit Kaltluft-Bypass gemäß dem Oberbegriff des Anspruchs 1.

Üblicherweise sind Kaltluft-Bypässe nur bei sehr hochwertigen, mehrzonigen Klimaanlagen vorgesehen, um den Komfort der Insassen, insbesondere im Frontbereich, zu verbessern. Der Kaltluft-Bypass dient hierbei der Temperaturabsenkung der durch die Mitteldüse austretenden Luft, da ein entsprechendes Temperaturgefälle durch die Insassen als angenehm empfunden wird. Hierbei können auch Kaltluft-Bypässe für die einzelnen Klimazonen vorgesehen sein.

Das Vorsehen von in das Klimaanlagengehäuse integrierten Kaltluftkanälen zur Erzeugung einer Temperaturschichtung ist beispielsweise in der DE 102 61 036 A1 beschrieben. Hierbei ist durch einen separat ausgebildeten Schichtungskanal kühle Luft in den Bereich der Fondbelüftung führbar. Der Schichtungskanal greift kalte Luft nach dem Verdampfer, hinter einer Temperaturklappe ab und leitet dieselbe direkt in den Fondbereich.

Die JP 63 173714 A offenbart eine Klimaanlage für Kraftfahrzeuge gemäß Oberbegriff des Anspruchs 1, bei der ein Warmluftbypass stromabwärts eines Mischelements, wobei auch ein Kaltluftbypass vorgesehen ist.

Aus der FR 2 789 629 B1 ist eine andere Kraftfahrzeugklimaanlage mit einem Kaltluft-Bypass bekannt, wobei die Kaltluft direkt hinter dem Verdampfer abgegriffen und einem anderen, der Belüftung dienenden Luftkanal beigemischt wird. Der Gesamtluftstrom wird hierbei über eine endseitig des Bypasses angebrachte Klappe, welche sich auch über den restlichen Strömungsquerschnitt des der Innenraumbelüftung dienenden Luftkanals erstreckt, geregelt.

Aus der DE 199 54 972 C1 ist eine Heizungs- oder Klimaanlage für eine Fahrgastzelle von Fahrzeugen bekannt, die einen Gehäusekasten aufweist, in dem hinter einem luftdurchströmbaren Wärmetauscher mindestens ein Luftmischraum mit einem in seinem oberen Bereich angeordneten Luftauslass zur Belüftung der Mittelebene der Fahrgastzelle und mindestens ein längs einer oberen Kastenwand über den Wärmetauscher hinweg in einem oberen Bereich des Luftmischraums geführter Kaltluft-Bypass ausgebildet sind. Hierbei ist der Kaltluft-Bypass in die Klimaanlage, d.h. in das Luftführungsgehäuse derselben, integriert ausgebildet.

Derartige Klimaanlagen lassen jedoch noch Wünsche offen.

Es ist daher Aufgabe der Erfindung, eine verbesserte Klimaanlage mit Kaltluft-Bypass zur Verfügung zu stellen.

Diese Aufgabe wird gelöst durch eine Klimaanlage mit Kaltluft-Bypass mit den Merkmalen des Anspruchs 1. Vorteilhafte Ausgestaltungen sind Gegenstand der Unteransprüche.

Erfindungsgemäß ist eine Klimaanlage: insbesondere für ein Kraftfahrzeug. vorgesehen, mit einem Gehäuse, in welchem Luftkanäle ausgebildet sind, und im Gehäuse angeordneten Verdampfer und Heizer, wobei das Gehäuse mit einem Kaltluft-Bypass versehbar ist, der als separates Teil ausgebildet ist. Erfindungsgemäß ist der Kaltluft-Bypass auf der Außenseite des Gehäuses anbringbar. Dies ermöglicht bei entsprechend vorbereiteter Ausgestaltung des Luftführungsgehäuses auf relativ einfache Weise, eine Klimaanlage ohne Kaltluft-Bypass durch Öffnen der entsprechenden Wandbereiche und Anbau des Kaltluft-Bypasses mit entsprechenden Klappen und Stellvorrichtungen, in eine Klimaanlage mit Kaltluft-Bypass umzuwandeln, wobei die Abgriffstelle relativ flexibel wählbar ist, so dass bei einer Klimaanlage auch verschiedene Abgriffvarianten möglich sind. Hierbei ist bevorzugt der Wandbereich, in dem der Kaltluft-Bypass vorsehbar ist, derart strömungstechnisch ausgestaltet, dass sich die Leistungsdaten der Klimaanlage durch die bauliche Veränderung nicht oder nur unwesentlich ändern, so dass zudem auf eine vollständige Neuauslegung (wie Akustik, Luftmenge, -verteilung, Regelkurven) der Klimaanlage mit Kaltluft-Bypass einschließlich der hierfür erforderlichen Berechnungen in der Regel verzichtet werden kann. Somit können Klimaanlagen mit und ohne Kaltluft-Bypass mit einem Werkzeug (Spritzgußform) hergestellt werden. Gegebenenfalls ist ein Einsatz für die unterschiedliche Ausgestaltung im Bereich des Auslasses zum Kaltluft-Bypass und zum Einlass in den entsprechenden Luftkanal beim Werkzeug erforderlich. Jedoch lassen sich die Herstellungskosten dadurch, dass ein Werkzeug für Klimaanlagen mit und ohne Kaltluft-Bypass verwendet werden kann und entsprechend die Stückzahlen je Werkzeug deutlich größer sind als bei unterschiedlichen Werkzeugen für beide (oder gegebenenfalls weitere) Klimaanlagentypen, auf Grund der relativ hohen Werkzeugkosten und der relativ geringen Stückzahlen für Klimaanlage mit Kaltluft-Bypass deutlich senken.

Ein Kanalaufsatz ist erfindungsgemäß als separates Teil ausgebildet und auf der Außenseite des Gehäuses angebracht. Dieser Kanalaufsatz ist nur im Falle einer Ausgestaltung der Klimaanlage als mehrzonige Klimaanlage vorgesehen, wobei die entsprechenden Öffnungen für die Kanäle, von denen einBereich, besonders bevorzugt der Einlassbereich mitsamt der die Luftströme regelnden Klappen, durch den Kanalaufsatz gebildet wird, im Gehäuse entsprechend der Öffnung für den Kaltluft-Bypass ausgebildet sein können.

Die den Kaltluft-Bypass durchströmende Luft wird bevorzugt mit Hilfe einer Klappe geregelt. Diese kann im Kaltluft-Bypass angeordnet sein, was die Vormontage vereinfacht. Alternativ kann sie auch am Gehäuse angebracht sein, was im Hinblick auf ein im Falle eines Fehlens des Kaltluft-Bypasses vorzusehendes Verschlussteil vorteilhaft sein kann. Die Regelung der Klappe - sofern vorhanden - kann automatisch in Abhängigkeit eines Temperatursensors und/oder manuell erfolgen.

Alternativ - oder ggf. auch in Verbindung mit einer eintrittsseitig angeordneten Klappe - kann eine Klappe am Ende des Kaltluft-Bypasses vorgesehen sein, welche den Kaltluftstrom regelt. Dieser Kaltluftstrom wird vorzugsweise in den Verteiler- und Mischraum der Klimaanlage eingeleitet, kurz vor den Klappen, welche den Luftaustritt zu den Mittel- und Seitendüsen regeln. Ebenfalls kann der Kaltluftstrom vom Kaltluft-Bypass auch an weiter hinten liegender Stelle in die Luftkanäle zu den Mittel- und Seitendüsen eingeleitet werden. Eine am Ende des Kaltluft-Bypasses angeordnete Klappe ist insbesondere in Hinblick auf beschränkte Bauraumverhältnisse hilfreich.

Der Luftaustritt aus dem Kaltluft-Bypass erfolgt vorzugsweise in Form mehrerer Teilströme, insbesondere bevorzugt sind zwei bis fünf, besonders bevorzugt drei, Teilströme, in die die vom Kaltluft-Bypass kommende Luft aufgeteilt und der temperierten Luft, insbesondere der Luft, welche zur Mitteldüse geleitet wird, zugeführt wird. Durch die Aufteilung in einzelne Teilströme kann auch auf kurzen Strecken eine ausreichende Luftvermischung erfolgen, um ein relativ gleichmäßiges Temperaturprofil der ausströmenden Luft an der nachgeordneten Düse zu ermöglichen, wodurch der Komfort im Fahrzeuginnenraum erhöht wird.

Das Gehäuse der Klimaanlage weist vorzugsweise bei fehlendem Kaltluft-Bypass eine Sollbruchstelle im Bereich des Auslasses für den Kaltluft-Bypass auf.

Die Herstellung des Gehäuses wie auch des getrennt ausgebildeten Kaltluft-Bypasses erfolgt mittels Spritzgießens.

Im Folgenden wird die Erfindung anhand eines Ausführungsbeispiels mit mehreren Varianten, teilweise unter Bezugnahme auf die Zeichnung, im Einzelnen erläutert. In der Zeichnung zeigen:
- Fig. 1: eine schematische, geschnittene Ansicht einer Klimaanlage mit Kaltluft-Bypass,

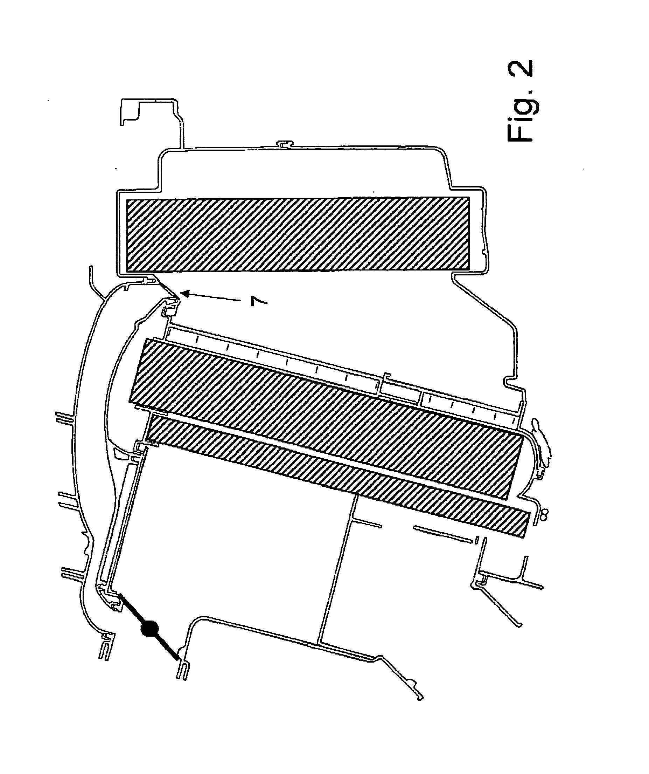

- Fig. 2: eine Fig. 1 entsprechende Klimaanlage, bei welcher der Kaltluftauslass herstellungsbedingt geschlossen ist, jedoch der Kaltluft-Bypass angebaut dargestellt ist,

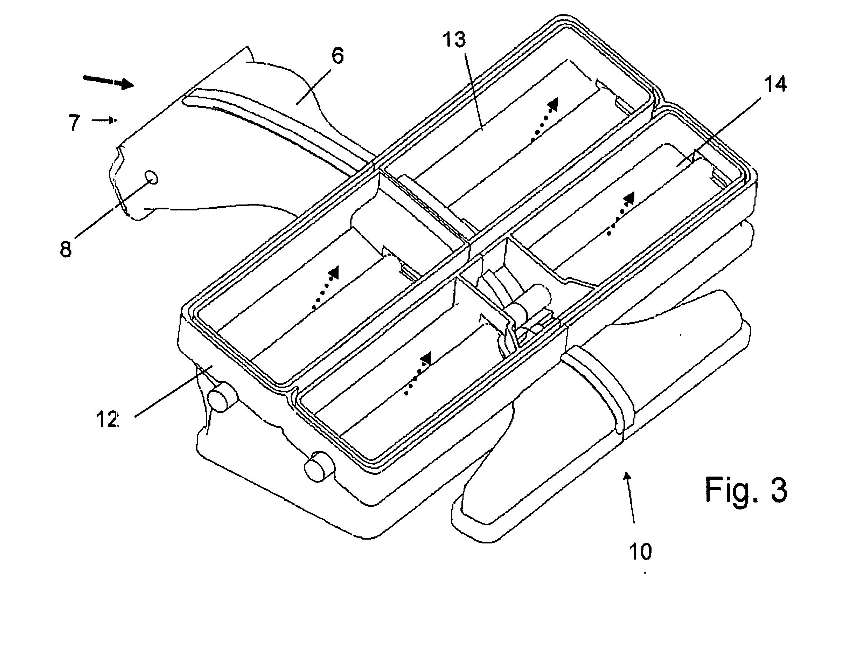

- Fig. 3: den Kaltluft-Bypass mit einem Kanalaufsatz Defrost/indirekte Belüftung für eine mehrzonige Klimaanlage,

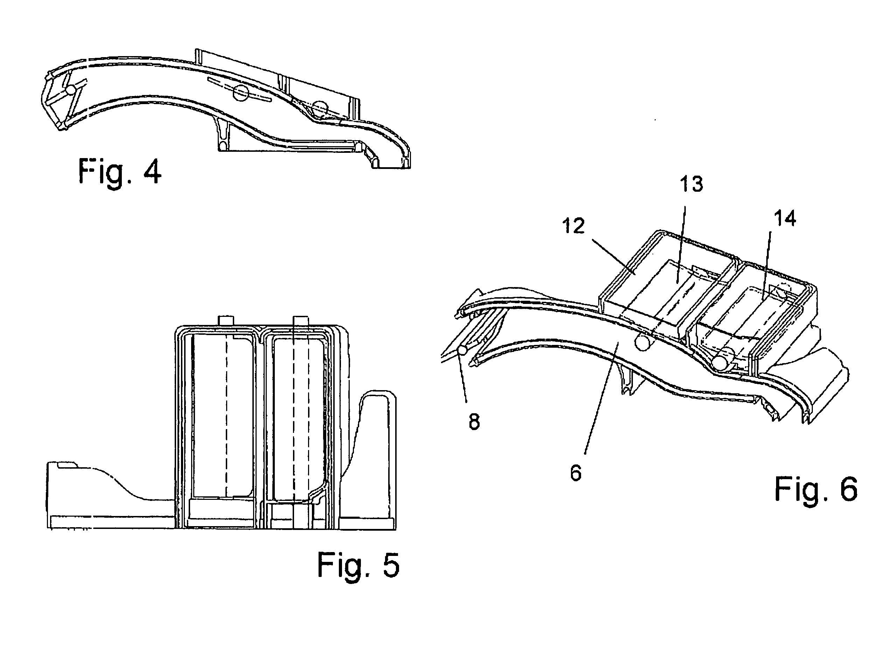

- Fig. 4: eine Seitenansicht des Kaltluft-Bypasses mit Kanalaufsatz von Fig. 3,
- Fig. 5: eine Draufsicht auf den Kaltluft-Bypass mit Kanalaufsatz von Fig. 3,
- Fig. 6: eine ISO-Ansicht des Kaltluft-Bypasses mit Kanalaufsatz von Fig. 3,
- Fig. 7: eine perspektivische Ansicht eines Kaltluft-Bypasses gemäß einer Variante,
- Fig. 8: eine andere perspektivische Ansicht des Kaltluft-Bypasses von Fig. 7,
- Fig. 9: eine Schnittdarstellung einer Klimaanlage mit dem Kaltluft-Bypass von Fig. 7 in der Betriebsstellung "Kaltluft-Bypass offen",
- Fig. 10: eine Schnittdarstellung einer Klimaanlage mit dem Kaltluft-Bypass von Fig. 7 in der Betriebsstellung "Kaltluft-Bypass geschlossen",
- Fig. 11: eine perspektivische Ansicht der Mitteldüse, wie sie am Ende des Kaltluft-Bypasses der Figuren 7 bis 10 angeordnet ist, mit Blick auf die Eintrittsseite der Kaltluft,
- Fig. 12: eine andere perspektivische Ansicht der Mitteldüse von Fig. 11, gesehen von der Austrittsseite der Kaltluft her.

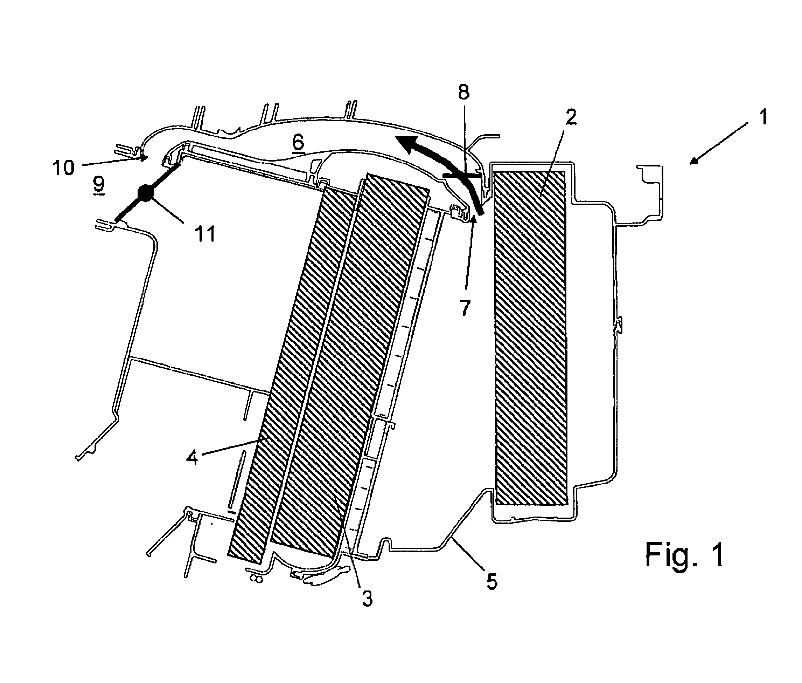

In Fig. 1 ist eine dreizonige Klimaanlage 1 mit einem Verdampfer 2 und einem Heizer 3 mit elektrischem Zuheizer 4, die in einem mehrteiligen Gehäuse 5 mit Trennwänden angeordnet sind, dargestellt. Im Bereich vor oder nach dem Heizer 3 befindet sich eine nicht dargestellte Klappenanordnung mit einer oder mehreren Klappen, zur Einstellung der Temperatur der dem Innenraum zuzuführenden Luft. Vorliegend handelt es sich hierbei um eine mehrzonige Klimaanlage bei der im Frontbereich sowohl auf der Fahrerseite als auch auf der Beifahrerseite über die entsprechende Mitteldüse vom Verdampfer 2 kommende Kaltluft zuführbar ist, wodurch eine gelegentlich als angenehm empfundene Temperaturdifferenz zwischen einzelnen Luftausströmdüsen herstellbar ist. Am Gehäuse 5 ist, in Fig. 1 oben dargestellt, hierfür ein Kaltluft-Bypass 6 angebaut.

Um Kaltluft aus dem Gehäuse 5 nach dem Verdampfer 2 und vor dem Heizer 3 für eine Temperaturabsenkung der aus den Mitteldüsen strömenden Luft abzuzweigen, ist das Gehäuse 5 mit einem Auslass 7 versehen, welcher gleichzeitig den Einlass für die Kaltluft in den Kaltluft-Bypass 6 bildet. Im Bereich des Einlasses ist im Kaltluft-Bypass 6 eine Klappe 8 zur Regelung der den Kaltluft-Bypass 6 durchströmenden und dem Luftkanal 9 zur Mitteldüse zuzuführenden Kaltluft angeordnet, wobei die Klimaanlage 1 ihrer Funktion nach im geschlossenen Zustand der Klappe 8 einer entsprechenden Klimaanlage ohne Kaltluft-Bypass entspricht. Der Kaltluft-Bypass 6 verläuft auf der Außenseite des Gehäuses 5 entlang und mündet in einen Luftkanal 9 zur Mitteldüse ein, wobei diese Einmündungsstelle auch als Auslass 10 zum Luftkanal 9 bezeichnet wird. Im Luftkanal 9, der von einem Mischraum der Klimaanlage 1 abzweigt, in welchem Luft, die direkt vom Verdampfer 2 kommt, und Luft, die noch den Heizer 3 und Zuheizer 4 durchströmt hat, vermischt wird, ist vor dem Einmünden des Kaltluft-Bypasses 6 eine Klappe 11 angeordnet.

Somit kann durch die Mitteldüse im Bedarfsfall auch ausschließlich durch den Kaltluft-Bypass 6 strömende, direkt vom Verdampfer 2 kommende, kalte Luft in das Fahrzeuginnere gelangen. Bei geschlossener Klappe 11 ist jedoch der Volumenstrom geringer als wenn die kalte Luft vom Verdampfer 2 um den Heizer 3 und Zuheizer 4 herum über den Mischraum und durch die offene Klappe 11 strömt. Auf diese Weise lassen sich unterschiedliche Einströmtemperaturen an Mitteldüse und den anderen Düsen o. ä. realisieren. Im Falle einer automatischen Betätigung der Klappe 8 ist mindestens ein Temperatursensor im Kaltluft-Bypass 6 vorgesehen, der eine vorgegebene Temperaturabsenkung der durch die Mitteldüse ausströmenden Temperatur ermöglicht. Jedoch ist auch eine manuelle Regelung ohne Temperatursensor oder unter Umgehung der Regelungsautomatik möglich.

Der Kaltluft-Bypass 6 ist gemäß dem in der Zeichnung dargestellten Ausführungsbeispiel derart ausgebildet, dass ein Kanalaufsatz 12 von außen auf das Gehäuse 5 und den Kaltluft-Bypass 6 aufgesetzt werden kann, welcher einen Teil der Luftkanäle mit entsprechenden Klappen zum Defrostaustritt und für die indirekte Belüftung bildet. Der Luftkanal zum Defrostaustritt ist mit dem Bezugszeichen 13, der Luftkanal für die indirekte Belüftung mit dem Bezugszeichen 14 bezeichnet.

Der Kanalaufsatz 12 ist vorliegend derart ausgebildet, dass eine Anbringung am Gehäuse 5 auch ohne Kaltluft-Bypass 6 möglich ist. Im Falle eines Kaltluft-Bypasses 6 wird dieser durch den Kanalaufsatz 12 mit gesichert.

Im Falle einer noch einfacheren Klimaanlage kann neben dem Kaltluft-Bypass 6 auch der Kanalaufsatz 12 entfallen und die entsprechenden Öffnungen im Gehäuse 5 mittels entsprechender Verschlussteile (oder fest mit Sollbruchstellen) verschlossen sein, so dass auch für diese einfachste Variante der Klimaanlage die gleiche Spritzgußform verwendet werden kann.

Um einen einfachen Umbau des Werkzeugs zu ermöglichen, der keine weiteren Verstellarbeiten, insbesondere der benötigten Materialmenge, hervorruft, ist im Bereich des Auslasses 7 zum Kaltluft-Bypass 6 in der Spritzgußform ein auswechselbarer Einsatz vorgesehen, mit welchem in einem Fall der Auslass 7 freigelassen wird und die für die Anbringung des Kaltluft-Bypasses 6 erforderlichen Geometrien auf der Gehäuseaußenseite ausgebildet werden, und im anderen Fall, nämlich bei einer Klimaanlage ohne Kaltluft-Bypass, im entsprechenden Bereich eine durchgehende Wand vorgesehen wird.

Alternativ kann der Auslass 7 derart verschlossen ausgebildet sein, dass im Bedarfsfall, d.h. wenn ein Kaltluft-Bypass angeschlossen werden soll, ein Öffnen auf einfache Weise möglich ist. In diesem Fall ist nur eine Spritzgußform ohne Einsatz erforderlich, jedoch ein zusätzlicher Arbeitsgang, nämlich das Herausbrechen oder auf andere Weise Entfernen des den Auslass verschließenden Wandbereichs. Um das Entfernen des Wandbereichs zu erleichtem, kann eine entsprechende Sollbruchstelle vorgesehen sein. Vorteil in diesem Fall ist, dass eine Klimaanlage relativ einfach und kostengünstig nachgerüstet werden kann, da das Gehäuse hierfür vorbereitet ist und die Klimaanlage selbst nur relativ wenig Umbauarbeiten in Verbindung mit der Betätigung und Regelung der zusätzlichen Klappe im Kaltluft-Bypass erfordert.

Als weitere Alternative mit einer einzigen Spritzgußform für das Gehäuse kann die Klappe, die im Falle eines Kaltluft-Bypasses vorgesehen ist, am Gehäuse anbringbar sein, wobei die Klappe im Falle eines Fehlens des Kaltluft-Bypasses fest geschlossen angebracht wird, oder durch ein entsprechendes Verschlussteil ersetzt wird.

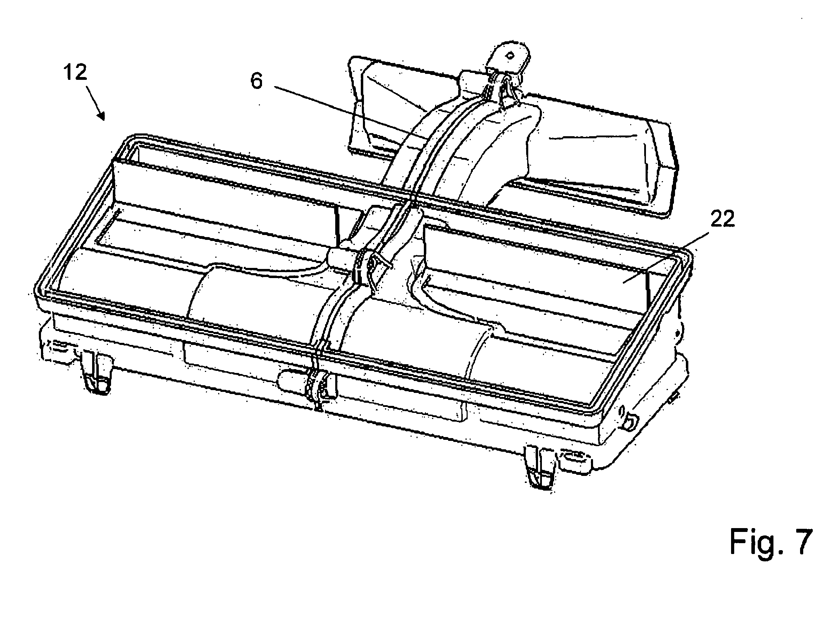

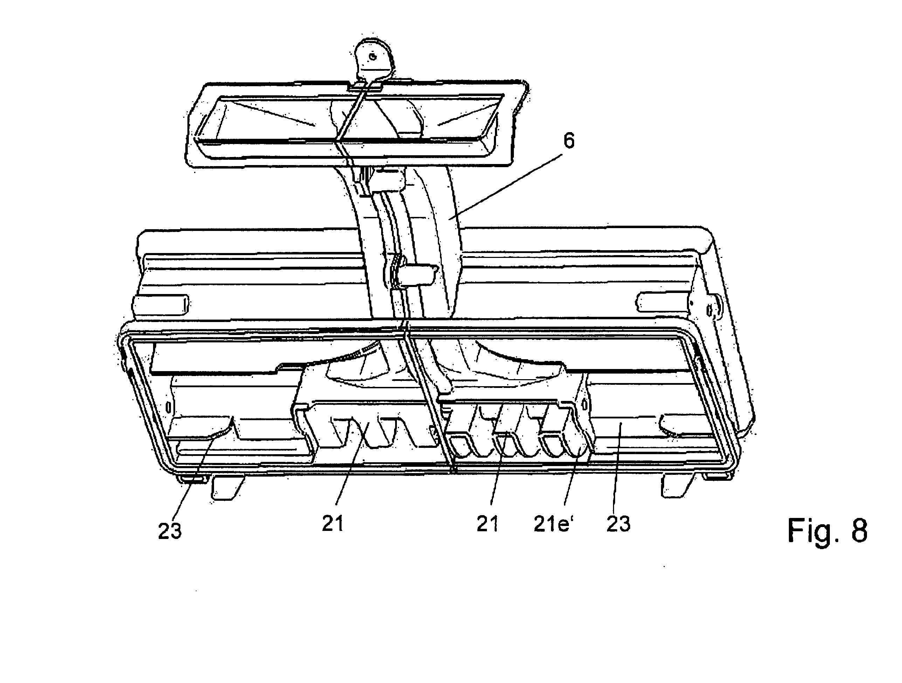

In den Figuren 7 bis 10 ist eine zweizonige Klimaanlage 1 mit einem als Kanalaufsatz 12 ausgebildeten Kaltluft-Bypass 6 gemäß einer Variante dargestellt. Auch im Falle dieser leicht abgewandelten Klimaanlage 1 wird die Kaltluft direkt nach dem Verdampfer (nicht dargestellt) über die gesamte Breite abgegriffen und über den vorliegend wiederum als Anbauteil ausgebildeten Kaltluft-Bypass 6, der durch eine in der Mittellängsebene verlaufende Trennwand in zwei spiegelbildlich ausgebildete Teile unterteilt ist, direkt zu einem Mischraum der Klimaanlage 1 geleitet, wo die Kaltluft der Luft im Mischraum beigemischt und gemeinsam mit dieser über anschließende Luft kanäle dem Fahrzeuginnenraum, insbesondere der Mittel- und Seitendüse, zugeführt wird.

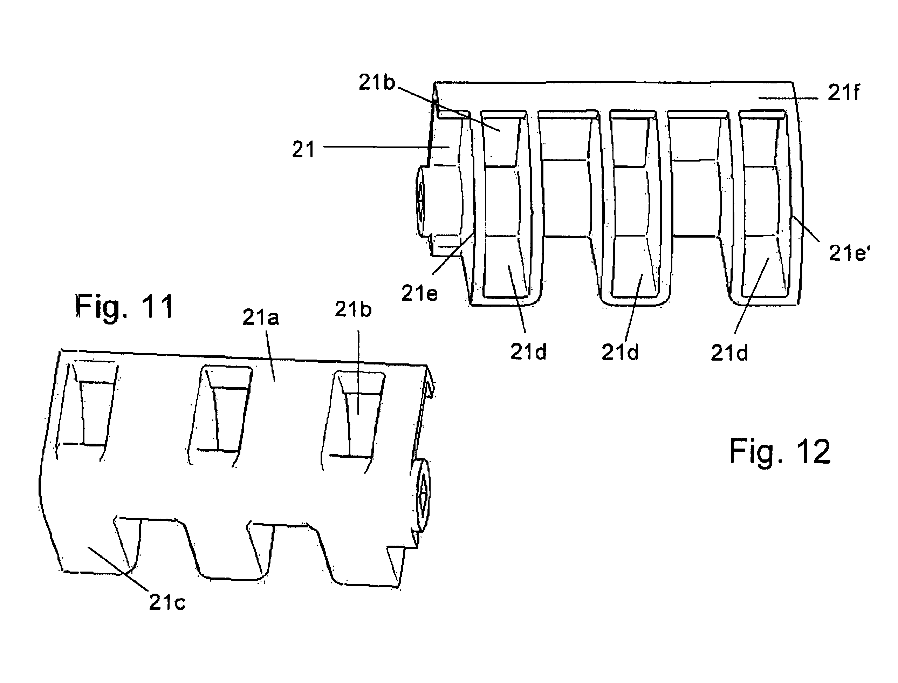

Im Unterschied zum zuvor beschriebenen Ausführungsbeispiel ist jedoch keine der Absperrung dienende Klappe 8 im Bereich des Lufteintritts in den Kaltluft-Bypass 6 vorgesehen. Ferner ist vorliegend die Einmündung des Kaltluftkanals vor der Klappe 11, direkt in den Verteiler- und Mischraum der Klimaanlage 1 vorgesehen. Die Regelung des Luftstroms, der durch den Kaltluft-Bypass 6 strömt, erfolgt im vorliegenden Fall ausschließlich durch zwei am Ende des Kaltluft-Bypasses 6 angeordnete und je einem Teil desselben, d.h jeweils einer der beiden Zonen, zugeordnete Mischklappen 21, die in Figuren 11 und 12 im Detail dargestellt sind und an späterer Stelle näher erläutert werden. Ferner unterscheidet sich der Ort der Einmündung des Kaltluft-Bypasses 6 von dem des zuvor beschriebenen AusführungsbeiSpiels.

Am als Anbauteil ausgebildeten Kanalaufsatz 12, der den Kaltluft-Bypass 6 beinhaltet, sind auch vorstehend genannte Mischklappen 21 angeordnet. Ferner bildet der Kanalaufsatz 12 einen Teil des Luftkanals 13 zum Defrostaustritt, wobei die hierin angeordneten Defrostklappen 22 in Fig. 7 in geöffneter Stellung dargestellt sind.

Integriert in den Kanalaufsatz 12 zweigen ferner seitlich nach außen - ausgehend vom Kaltluft-Bypass 6 und verschließbar von den Mischklappen 21 - Kaltluft-Kanäle 23 zu den Luftkanälen, die zu den Seitendüsen führen, ab. D.h. nicht nur die beiden Mitteldüsen, also die fahrerseitige und die beifahrerseitige Mitteldüse, werden über den zentralen Kaltluft-Bypass 6 mit Kaltluft versorgt, sondern ein Teil der Luft wird zu den beiden Seitendüsen geleitet. Dabei erfolgt die Luftverteilung - sowohl der Kaltluft vom Kaltluft-Bypass 6 als auch der temperierten Luft vom Mischraum der Klimaanlage 1 - auf Mittel- und Seitendüsen gleichmäßig, so dass bei der austretenden Luft kein (wesentliches) Temperaturgefälle in einer Zone, d.h. vorliegend zwischen den beiden Seiten des Fahrers beziehungsweise des Beifahrers auftritt.

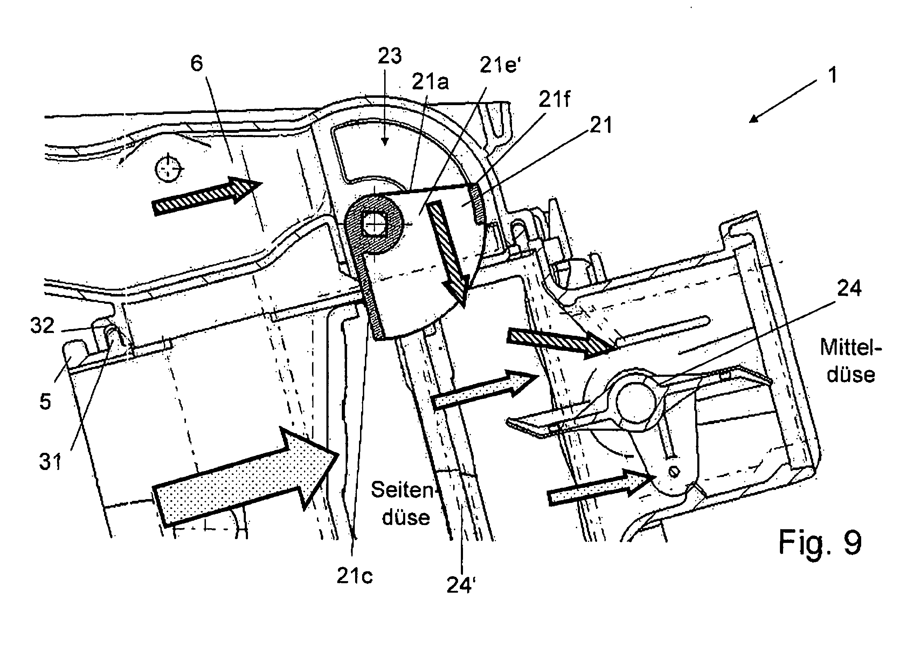

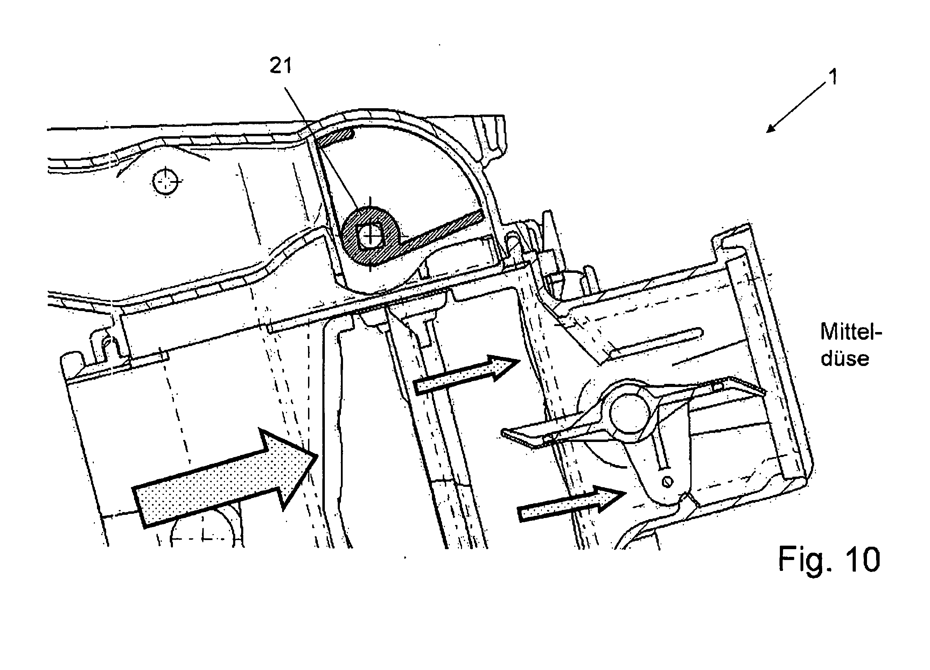

Wie aus Fig. 9 und 10 ersichtlich, mündet der Kaltluft-Bypass 6 in den Bereich des Verteiler- und Mischraums der Klimaanlage 1 direkt benachbart und in Luftströmungsrichtung vor Klappen 24, welche den Luftstrom zu den Mitteldüsen regeln, und vor Klappen 24' gelegen, welche den Luftstrom zu den Seitendüsen regeln, und nach der oben angeordneten Austrittsöffnung zu den Defrost-Austrittsöffnungen. Die Einstellung der Luftausströmrichtung und ob eine diffuse oder eine gerichtete Luftströmung aus den Düsen gewünscht wird, erfolgt auf an sich bekannte Weise direkt am Ausströmer (nicht dargestellt).

Ferner ermöglicht die vorstehend beschriebene und in der Zeichnung dargestellte Ausgestaltung die Absenkung der Luftaustrittstemperatur an den Mittel- und Seitendüsen auf eine Temperatur, die unter derjenigen der Defrost-Austrittsöffnungen liegt, was bei bestimmten Betriebsbedingungen vorteilhaft sein kann.

Die Mischklappen 21, im Folgenden auch nur als Klappen 21 bezeichnet, sind als Mischmodule in Bezug auf die den Mitteldüsen zugeführte Luft, nämlich durch den vom Mischraum der Klimaanlage kommenden Warmluftstrom und den durch den Kaltluft-Bypass 6 kommenden Kaltluftstrom, ausgebildet. In Folge des sehr kurzen Strömungsweges zu den Mitteldüsen sind im vorliegenden Fall Maßnahmen zur Vermischung der unterschiedlich temperierten Luftströme erforderlich, um keine Beeinträchtigung des Komforts im Fahrzeuginnenraum zu bewirken. Diese Maßnahmen zur Vermischung der unterschiedlichen Luftströme werden vorliegend durch eine Aufteilung des dem temperierten Luftstrom zuzuführenden Kaltluftstrom vom Kaltluft-Bypass 6 in drei Teilluftströme zum temperierten Luftstrom zur Mitteldüse und einem weiteren, der entsprechenden Seitendüse zuzuführenden Teilluft strom. Natürlich kann die Aufteilung auch in mehr als drei Teilluftströme in Hinblick auf den der Mitteldüse zuzuführenden Teilluftstrom erfolgen.

Auf Grund des jeweils relativ langen Strömungsweges zu den Seitendüsen sind im vorliegenden Fall keine speziellen Maßnahmen erforderlich, um eine gleichmäßige Temperaturverteilung im Luftstrom am Luftaustritt der Seitendüsen zu erhalten. Die Vermischung erfolgt vielmehr im Laufe des Strömungsweges, unterstützt durch einen zumindest bereichsweise gekrümmten Strömungsverlauf. Prinzipiell ist jedoch auch eine Aufteilung des Kaltluftstroms und/oder des temperierten Luftstroms in Teilluftströme - entsprechend dem Kaltluftstrom zur Mitteldüse - möglich. Dahingegen ist der Strömungsweg zur jeweiligen Mitteldüse extrem kurz, so dass die Vermischung der Kalt- und Warmluft unterstützt werden muss, was vorliegend durch die spezielle Ausgestaltung der Mischklappen 21 erfolgt, jedoch prinzipiell auch durch eine andere in ihrer Funktion entsprechend ausgebildete Anordnung erfolgen kann.

Im Folgenden wird der Aufbau der Mischklappen 21, die in den Figuren 11 und 12 dargestellt sind, näher erläutert: Jede Mischklappe 21 weist eine erste, kaltluftanströmseitige Klappenfläche 21a mit drei Öffnungen 21 b, welche die Einströmöffnungen für die Kaltluft vom Kaltluft-Bypass 6 in die Klappe 21 bilden, und in einem Winkel von ca. 90° versetzt hierzu eine zweite, zweimal unterbrochene, kaltluftabströmseitige Klappenfläche 21c auf. Die Öffnungen 21b in der ersten Klappenfläche 21a sind in endseitig offenen Kanälen 21d bis zur zweiten Klappenfläche 21c weitergeführt, wobei die Kanäle 21d in axialer Richtung der Klappe 21, also seitlich, durch sich in radialer Richtung erstreckende, kreissegmentartige Wände 21e begrenzt sind. In radialer Richtung bildet das Gehäuse die Begrenzung. Die einzelnen Wände 21 e der Kanäle sind abwechselnd kaltluftabströmseitig und kaltluftanströmseitig miteinander verbunden, wobei die Verbindungsbereiche die zweite und die erste Klappenfläche 21c bzw. 21a bilden. In Umfangsrichtung sich über die gesamte Länge der Klappe 21 erstreckend ist ausgehend von der ersten, kaltluftanströmseitigen Klappenfläche 21 a ein kurzer Rand 21f ausgebildet.

Wie aus Fig. 11 und 12 ersichtlich, ist die im zusammengebauten Zustand der Klimaanlage mittig angeordnete Wand 21e etwas beabstandet von der die beiden Zonen trennenden Trennwand angeordnet. Die andere äußere Wand 21e' der Klappe 21 ist Teil einer ebenen Fläche in Form eines Viertelkreises und liegt flächig an einer Gehäusewand an. In dieser Gehäusewand ist die Öffnung für den Kaltluftkanal 23 zur Seitendüse ausgebildet, so dass im geschlossenen Zustand der Klappe 21 auch diese Öffnung zum Kaltluftkanal 23 vollständig verdeckt ist. Die Öffnung weist hierbei eine etwa viertelskreisringförmige Gestalt auf, wobei der Außendurchmesser des Kreisrings etwas kleiner als der Außendurchmesser der äußeren Wand 21e' der Klappe 21 ist.

Wird die Klappe 21 geöffnet, so dass Kaltluft dem der Mitteldüse zugeführten temperierten Luftstrom vom Mischraum zugeführt wird, so wird gleichzeitig auch die Öffnung zum Kaltluftkanal 23 entsprechend weit freigegeben, und durch den Kanal gelangt nunmehr ebenfalls Kaltluft in den weiterführenden Luftkanal zur Seitendüse, der im Mischraum beginnt. Die Anbringung des Kaltluft-Bypasses 6 am Gehäuse 5 der Klimaanlage 1 erfolgt auf an sich bekannte Weise mittels Aufsetzen und Fixieren, wobei zur Positionierung und Abdichtung am Gehäuse außenseitig ein umlaufender Vorsprung 31 sowohl im Bereich des Abgriffs als auch im Bereich der Einleitung und am Kaltluft-Bypass 6 jeweils Endseitig eine umlaufende Nut 32 ausgebildet sind. In der Nut 32 kann zusätzlich ein elastisch verformbares Dichtelement angeordnet sein. Die Fixierung der beiden Bauteile aneinander kann beispielsweise mittels Clipsverbindungen und/oder Schrauben erfolgen, wofür das Gehäuse 5 und der Kaltluft-Bypass 6 entsprechend ausgebildet sind.

Alternativ zur beschriebenen zweizonigen Klimaanlage kann auch eine einzonige Klimaanlage vorgesehen sein. In diesem Fall kann die Ausgestaltung entsprechend der zuvor beschriebenen Ausgestaltung erfolgen, jedoch sind die beiden Mischklappen 21 miteinander starr gekoppelt, so dass für die Betätigung nur ein Aktuator erforderlich ist. Die Koppelung kann auch über die Regelung erfolgen, d.h. die beiden Aktuatoren werden einander entsprechend geregelt. Ebenso kann auch eine durchgehende Mischklappe vorgesehen sein und die Trennwand des Kaltluft-Bypasses entfallen.

## Patentansprüche

1. Klimaanlage, insbesondere für ein Kraftfahrzeug, mit einem Gehäuse (5), in welchem Luftkanäle (9) ausgebildet sind, und im Gehäuse (5) angeordneten Verdampfer (2) und Heizer (3) wobei das Gehäuse (5) mit einem, auf der Außenseite des Gehäuses (5) angebrachten Kaltluft-Bypass (6) versehen ist, der als separates Teil ausgebildet ist, **dadurch gekennzeichnet, dass** ein Kanalaufsatz (12), welcher einen Teil der Luftkanäle mit entsprechenden Klappen zum Defrostaustritt und für die Indirekte Belüftung bildet, als separates Teil auf der Außenseite des Gehäuses (5) und des Kaltluft-Bypasses (6) angebracht ist.

2. Klimaanlage nach Anspruch 1, **dadurch gekennzeichnet, dass** das Gehäuse (5) im Bereich zwischen Verdampfer (2) und Heizer (3) einen Auslass (7) aufweist.

3. Klimaanlage nach einem der vorhergehenden Ansprüche, **dadurch gekennzeichnet, dass** ein geteilter Kaltluft-Bypass oder zwei Kaltluft-Bypässe (6) vorgesehen sind, wobei der eine Teil oder Kaltluft-Bypass (6) der Fahrerseite und der andere Teil oder Kaltluft-Bypass (6) der Beifahrerseite zugeordnet ist.

4. Klimaanlage nach einem der vorhergehenden Ansprüche, **dadurch gekennzeichnet, dass** der Kaltluft-Bypass (6) in einen Luftkanal (9) zur Mitteldüse nach einem dem Heizer (3) nachgeordneten Mischraum einmündet, oder dass der Kaltluft-Bypass (6) in einen dem Heizer (3) nachgeordneten Mischraum vor einer Klappe (24, 24'), welche den Luftaustritt zur Mittel- und/oder Seitendüse regelt, einmündet.

5. Klimaanlage nach einem der vorhergehenden Ansprüche, **dadurch gekennzeichnet, dass** eine Klappe (8; 21) zur Regelung der den Kaltluft-Bypass (6) durchströmenden Luft vorgesehen ist.

6. Klimaanlage nach Anspruch 5, **dadurch gekennzeichnet, dass** die Klappe (8; 21) kurz nach dem Auslass (7) zum Kaltluft-Bypass (6) in demselben oder am Ende des Kaltluft-Bypasses (6) angeordnet ist.

7. Klimaanlage nach einem der vorhergehenden Ansprüche, **dadurch gekennzeichnet, dass** eine Klappe (21) am Ende des Kaltluft-Bypasses (6) angeordnet ist, welche die Kaltluft auf mehrere Düsen geregelt verteilt, insbesondere auf die Mitteldüse und die Seitendüse des Fahrer oder Beifahrerbereichs.

8. Klimaanlage nach einem der vorhergehenden Ansprüche, **dadurch gekennzeichnet, dass** eine Klappe (21) am Ende des Kaltluft-Bypasses (6) angeordnet ist, welche als Mischklappe ausgebildet ist, und die von der Klappe (21) geregelte Kaltluft in mehrere Teilströme aufgeteilt dem Mischraum der Klimaanlage (1) und/oder mindestens einem vom Mischraum der Klimaanlage (1) kommenden, temperierten Luftstrom zugeführt wird.

9. Verfahren zur Herstellung eines Gehäuses (5) für eine Klimaanlage (1) mittels Spritzgießens, insbesondere für ein Kraftfahrzeug, mit einem Gehäuse (5), in welchem Luftkanäle (9) ausgebildet sind, und im Gehäuse (5) angeordneten Verdampfer (2) und Heizer (3) wobei das Gehäuse (5) mit einem, auf der Außenseite des Gehäuses (5) angebrachten Kaltluft-Bypass (6) versehen ist, der als separates Teil ausgebildet ist, wobei ein Kanalaufsatz (12), welcher einen Teil der Luftkanäle mit entsprechenden Klappen zum Defrostaustritt und für die Indirekte Belüftung bildet, als separates Teil auf der Außenseite des Gehäuses (5) und des Kaltluft-Bypasses (6) angebracht ist, **dadurch gekennzeichnet, dass** in die Spritzgußform ein Austauschteil einsetzbar ist, mit Hilfe dessen ein Auslass (7) für einen Kaltluft-Kanal (6) ausbildbar ist, wobei nach dem Spritzgießen ein Wandbereich des Gehäuses (5) an einer Sollbruchstelle zur Bildung eines Auslasses (7) herausgebrochen und bei der Montage im Bereich des Auslasses (7) auf der Außenseite des Gehäuses (5) der Kaltluft-Bypass (6), angebracht wird.

## Claims

1. An air conditioning unit, in particular for a motor vehicle, comprising a housing (5), in which air ducts (9) are formed, and an evaporator (2) and heater (3), which are arranged in the housing (5), the housing (5) being provided with a cold air bypass (6), which is attached to the outside of the housing (5) and designed as a separate part, **characterized in that** a duct attachment (12), which forms part of the air ducts with appropriate flaps for the defrost discharge and for indirect ventilation, is attached as a separate part on the outside of the housing (5) and the cold air bypass (6).

2. The air conditioning unit according to claim 1, **characterized in that** the housing (5) comprises an outlet (7) between the evaporator (2) and heater (3).

3. An air conditioning unit according to any one of the preceding claims, **characterized in that** a divided cold air bypass is provided, or two cold air bypasses (6) are provided, wherein the one part or cold air bypass (6) is associated with the driver side and the other part or cold air bypass (6) is associated with the front-seat passenger side.

4. An air conditioning unit according to any one of the preceding claims, **characterized in that** the cold air bypass (6) leads into an air duct (9) to the center nozzle after a mixing chamber that is arranged downstream of the heater (3), or the cold air bypass (6) leads into a mixing chamber that is arranged upstream of the heater (3) in front of a flap (24, 24'), which regulates the air discharge to the center and/or side nozzles.

5. An air conditioning unit according to any one of the preceding claims, **characterized in that** a flap (8; 21) for regulating the air flowing through the cold air bypass (6) is provided.

6. The air conditioning unit according to claim 5, **characterized in that** the flap (8; 21) is arranged just after the outlet (7) to the cold air bypass (6) in the same, or at the end of the cold air bypass (6).

7. An air conditioning unit according to any one of the preceding claims, **characterized in that** a flap (21) is arranged at the end of the cold air bypass (6), the flap distributing the cold air to several nozzles, in particular to the center nozzle and the side nozzle of the driver or front-seat passenger region.

8. An air conditioning unit according to any one of the preceding claims, **characterized in that** a flap (21) is arranged at the end of the cold air bypass (6), the flap being designed as a blend door, and the cold air that is regulated by the flap (21) is divided into several sub-streams and supplied to the mixing chamber of the air conditioning unit (1) and/or is supplied at least one temperature-controlled air stream that comes from the mixing chamber of the air conditioning unit (1).

9. A method for producing a housing (5) for an air conditioning unit (1) by way of injection molding, in particular for a motor vehicle, comprising a housing (5), in which air ducts (9) are formed, and an evaporator (2) and heater (3), which are arranged in the housing (5), the housing (5) being provided with a cold air bypass (6), which is attached to the outside of the housing (5) and designed as a separate part, a duct attachment (12), which forms part of the air ducts with appropriate flaps for the defrost discharge and for indirect ventilation, being attached as a separate part to the outside of the housing (5) and cold air bypass (6), **characterized in that** an interchangeable part can be inserted in the injection mold, with the aid of which an outlet (7) for a cold air duct (6) can be formed, wherein after the injection molding process a wall region of the housing (5) is broken out on a predetermined breaking point so as to form an outlet (7) and the cold air bypass (6) is attached to the outside of the housing (5) during installation in the region of the outlet (7).

## Revendications

1. Système de climatisation, en particulier pour un véhicule à moteur, comprenant un carter (5) dans lequel sont configurés des conduits d'air (9), un évaporateur (2) et un dispositif de chauffage (3) étant disposés dans le carter (5), où le carter (5) est doté d'une dérivation d'air froid (6) fixée sur le côté extérieur du carter (5), dérivation d'air froid qui est conçue comme une partie séparée, **caractérisé en ce qu'**un chapeau de conduit (12), qui forme une partie des conduits d'air comportant des volets correspondants servant pour la sortie de dégivrage et pour la ventilation indirecte, est fixé, comme partie séparée, sur le côté extérieur du carter (5) et de la dérivation d'air froid (6).

2. Système de climatisation selon la revendication 1, **caractérisé en ce que** le carter (5) présente une sortie (7) située dans la zone comprise entre l'évaporateur (2) et le dispositif de chauffage (3).

3. Système de climatisation selon l'une ou l'autre des revendications précédentes, **caractérisé en ce qu'**il est prévu une dérivation d'air froid, qui est divisée, ou bien deux dérivations d'air froid (6), où l'une des parties de la dérivation d'air froid ou la dérivation d'air froid (6) est associée au côté conducteur, l'autre partie de la dérivation d'air froid ou la dérivation d'air froid (6) étant associée au côté passager assis à l'avant.

4. Système de climatisation selon l'une quelconque des revendications précédentes, **caractérisé en ce que** la dérivation d'air froid (6) débouche, en aval d'un espace de mélange disposé en aval du dispositif de chauffage (3), dans un conduit d'air (9) servant pour la buse centrale, ou bien **en ce que** la dérivation d'air froid (6) débouche, en amont d'un volet (24, 24'), dans un espace de mélange disposé en aval du dispositif de chauffage (3), volet qui règle la sortie d'air prévue pour la buse centrale et/ou latérale.

5. Système de climatisation selon l'une quelconque des revendications précédentes, **caractérisé en ce qu'**il est prévu un volet (8; 21) servant à régler l'air traversant la dérivation d'air froid (6).

6. Système de climatisation selon la revendication 5, **caractérisé en ce que** le volet (8; 21) est disposé dans la même dérivation d'air froid ou au niveau de l'extrémité de la dérivation d'air froid (6), peu après la sortie (7) pour la dérivation d'air froid (6).

7. Système de climatisation selon l'une quelconque des revendications précédentes, **caractérisé en ce qu'**un volet (21) est disposé au niveau de l'extrémité de la dérivation d'air froid (6), volet qui répartit, de façon réglée, l'air froid fourni à plusieurs buses, en particulier à la buse centrale et à la buse latérale de la zone du conducteur ou du passager assis à l'avant.

8. Système de climatisation selon l'une quelconque des revendications précédentes, **caractérisé en ce qu'**un volet (21) est disposé au niveau de l'extrémité de la dérivation d'air froid (6), volet qui est conçu comme un volet mélangeur, et l'air froid réglé par le volet (21) est fourni, en étant réparti en plusieurs flux partiels, à l'espace de mélange du système de climatisation (1) et/ou fourni à au moins un flux d'air tempéré provenant de l'espace de mélange du système de climatisation (1).

9. Procédé de fabrication d'un carter (5) pour un système de climatisation (1), mis en oeuvre au moyen d'un moulage par injection, en particulier pour un véhicule à moteur, système de climatisation comprenant un carter (5) dans lequel sont configurés des conduits d'air (9), un évaporateur (2) et un dispositif de chauffage (3) étant disposés dans le carter (5), où le carter (5) est doté d'une dérivation d'air froid (6) fixée sur le côté extérieur du carter (5), dérivation d'air froid qui est conçue comme une partie séparée, où un chapeau de conduit (12), qui forme une partie des conduits d'air comportant des volets correspondants servant pour la sortie de dégivrage et pour la ventilation indirecte, est fixé, comme partie séparée, sur le côté extérieur du carter (5) et de la dérivation d'air froid (6), **caractérisé en ce qu'**une pièce de rechange peut être introduite dans le moule de moulage par injection, pièce de rechange à l'aide de laquelle peut être formée une sortie (7) pour un conduit d'air froid (6) où, après le moulage par injection, une zone de paroi du carter (5) servant à la formation d'une sortie (7) est ouverte au niveau d'un point destiné à la rupture et, lors du montage, la dérivation d'air froid (6) est fixée sur le côté extérieur du carter (5), dans la zone de la sortie (7).
